# EUROPÄISCHE PATENTSCHRIFT

(11) **EP 1 659 293 B1**
(45) Veröffentlichungstag und Bekanntmachung des Hinweises auf die Patenterteilung: **19.03.2008**
(21) Anmeldenummer: 05025062.0
(22) Anmeldetag: 16.11.2005
(51) Int. Cl.: F04D 27/02

(54) **Strömungsmaschine**
Turbomachine
Turbomachine

(30) Priorität: 17.11.2004 DE 102004055439
(43) Veröffentlichungstag der Anmeldung: 24.05.2006
(73) Patentinhaber: Rolls-Royce Deutschland Ltd & Co KG, 15827 Dahlewitz (DE)
(72) Erfinder: Gümmer, Volker, 15831 Mahlow (DE)
(74) Vertreter: Weber, Joachim

(56) Entgegenhaltungen:
- EP-A1- 0 497 574
- EP-A1- 0 719 908
- EP-A1- 0 754 864
- EP-A2- 1 013 937
- EP-A2- 1 382 855
- WO-A-95/10692
- DE-A1- 10 330 084
- US-A- 5 950 308

## Beschreibung

Die Erfindung bezieht sich auf Strömungsarbeitsmaschinen wie etwa Bläser, Verdichter, Pumpen und Ventilatoren, sowohl in axialer, halbaxialer als auch in radialer Bauart. Das Arbeitsmedium oder Fluid kann gasförmig oder flüssig sein.

Die erfindungsgemäße Strömungsarbeitsmaschine kann eine oder mehrere Stufen mit üblicherweise jeweils einem Rotor und einem Stator umfassen; in Einzelfällen wird die Stufe lediglich durch einen Rotor gebildet.

Im Einzelnen betrifft die Erfindung eine Strömungsarbeitsmaschine mit zumindest einem Rotor, wobei der Rotor mehrere an einer rotierenden Welle befestigte Rotorschaufeln umfasst. Es kann mindestens ein Stator existieren, wobei der Stator mit feststehenden Statorschaufeln versehen ist. Es existiert ein Gehäuse, welches die Durchströmung des Rotors und des Stators mit einem Fluid nach außen begrenzt.

Die aerodynamische Belastbarkeit und die Effizienz von Strömungsarbeitsmaschinen wie Bläsern, Verdichtern, Pumpen und Ventilatoren werden durch das Wachstum und die Ablösung von Grenzschichten auf den Schaufeln sowie auf den Naben- und Gehäusewänden begrenzt. Der Stand der Technik schlägt eine kontinuierliche Grenzschichtentfernung oder eine kontinuierliche Fluidzufuhr zur Energetisierung der Grenzschichten als Maßnahme gegen dieses fundamentale Problem vor. Die existierenden Konzepte können im Hinblick auf die erzielte Beeinflussung der Grenzschichten durchaus wirksam arbeiten, doch sind die dazugehörigen Sekundärfluidmassenströme so groß, dass die Effizienz des Gesamtsystems, in dem sie eingesetzt werden, unter Umständen negativ beeinflusst wird.

Mit Bezug auf eine Fluidentnahme werden unterschiedliche Methoden vorgeschlagen, die eine Entfernung der Grenzschicht auf der Schaufelsaugseite durch Schlitze oder Löcher, oder auch durch feinporige Oberflächen, vorsehen. Üblicherweise wird die Grenzschicht zunächst ins Schaufelinnere geführt und dann aus der betreffenden Schaufel und dem Hauptströmungspfad der Strömungsarbeitsmaschine entfernt. Lediglich eine Lösung für einen Rotor sieht eine Absaugung auf der Schaufelsaugseite und ein direktes Wiederausströmen an der Schaufelspitze derselben Schaufel vor. Daneben existieren Entwürfe, die Umfangsschlitze vor oder hinter einer Schaufelreihe an Nabe oder Gehäuse vorsehen, um die dortige Seitenwandgrenzschicht abzusaugen. Immer jedoch handelt es sich, wenn auch in bestimmten Fällen auf Teile des Betriebsbereiches der Maschine beschränkt, um eine kontinuierliche Beeinflussung der Grenzschichten durch Fluidentnahme.

Der Stand der Technik, bezüglich einer Grenzschichtbeinflussung durch Fluidentnahme, wird inhaltlich durch folgende Dokumente zusammengefasst:
1.) Absaugung auf der Schaufeloberfläche durch Löcher, Einzelschlitze oder poröse Zonen
   US 2,720,356;
   US 3,694,102;
   US 3,993,414;
   US 5,904,470;
   US 5,480,284.
2.) Absaugung an Nabe oder Gehäuse durch Umfangsschlitze vor/hinter der Schaufelreihe
   Schuler et al.: Design, Analysis, Fabrication and Test of an Aspirated Fan Stage, ASME Paper 2000-GT-618; und
   Merchant et al.: Aerodynamic Design and Analysis of a High Pressure Ratio Aspirated Compressor Stage, ASME Paper 2000-GT-619.

Mit Bezug auf eine Fluidzufuhr existieren zahlreiche Konzepte an Turbinenschaufeln, doch sind diese nicht auf Strömungsarbeitsmaschinen übertragbar, da sie im Wesentlichen der Oberflächenkühlung und nicht der Grenzschichtenergetisierung dienen. Aus Verdichtergitterexperimenten sind Konzepte bekannt, bei denen aus einer druckbeaufschlagten Kammer im Schaufelinnern Luft auf die Schaufelsaugseite ausgeblasen wird, um die zweidimensional beschaffene Profilgrenzschicht zu energetisieren. Verwandte Alternativlösungen sehen ein direktes Durchtreten des Fluides von der Schaufeldruckseite zur Schaufelsaugseite vor. Daneben existiert für Rotoren ein Konzept zur Luftzufuhr an Nabe und Gehäuse durch achsensymmetrisch angeordnete Schlitze, um die dortigen Wandgrenzschichten zu beeinflussen. Schließlich gibt es Veröffentlichungen von Forschungsinstitutionen, die Konzepte aufzeigen, bei denen Rotoren in Gehäusenähe aus einzelnen Düsen angeblasen werden, um die dortige Radialspaltströmung günstig zu beeinflussen. Immer jedoch handelt es sich, wenn auch in bestimmten Fällen auf Teile des Betriebsbereiches der Maschine beschränkt, um eine kontinuierliche Beeinflussung der Grenzschichten durch Fluidzufuhr.

Der Stand der Technik bezüglich einer Grenzschichtbeinflussung durch Fluidzufuhr wird inhaltlich durch folgende Dokumente zusammengefasst:
US 5,690,473;
US 6,334,753;
US 2,870,957;
US 2,933,238;
US 5,480,284.

Schließlich existieren Konzepte, die unter Einsatz von Fluidentnahme und Fluidzufuhr eine Rezirkulation vorsehen.
US 2,749,027.

Als nachteilig erweist sich beim Stand der Technik, dass die existierenden Lösungen wohl eine positive Strömungsbeinflussung erreichen, doch die dafür aufgewendeten Sekundärfluidmassenströme so hoch sein müssen, dass der Wirkungsgrad der Gesamtanlage, die durch die Strömungsarbeitsmaschine mit ihrem Sekundärfluidsystem oder auch durch eine Gasturbine, ein Strahltriebwerk, ein Kraftwerk oder ein anderes übergeordnetes System gegeben sein kann, unter Umständen negativ beeinflusst wird. Bestehende Konzepte nutzen weder innerhalb der Strömungsarbeitmaschine existierende Quellen noch außerhalb der Strömungsarbeitsmaschine zusätzlich bereitgestellte Quellen für eine pulsierende oder wechselnde Sekundärfluidführung, die mit deutlich kleineren Hilfsmassenströmen eine Beeinflussung der Grenzschichten auf den Schaufel- und Wandoberflächen des Hauptströmungspfades der Strömungsarbeitsmaschine erlauben würde.

Die WO 95/10692 A sieht einen einzigen mit umlenkenden Schaufeln versehenen Kanal vor, dessen Eintritts- und Austrittsöffnungen allein innerhalb des Bereichs zwischen der Vorder- und der Hinterkante der Rotorspitze platziert sind und aktiv mit Hilfe von ventilartigen Steuereinheiten verschlossen und geöffnet werden können. Entscheidend ist hierbei insbesondere, dass die hier dargelegte Lösung eines Casing Treatments eine gleichzeitige Platzierung sowohl der Eintrittsöffnung als auch der Austrittsöffnung des besagten Kanals über der Rotorspitze vorsieht, wobei sich zumindest die Eintritts- und Austrittsöffnungen des Kanals entlang des gesamten Umfangs erstrecken. Demnach existieren keine am Umfang verteilten Einzelöffnungen, die eine dynamische Nutzung des fluktuierenden Rotordruckfeldes ermöglichen würden.

Die EP 1 382 855 A2 sieht an der Schaufelreihe einer Strömungsarbeitsmaschine eine Kombination aus einer Vorrichtung zur Fluidentnahme (verbunden mit einer stromauf gelegenen Stelle) und einer Vorrichtung zur Fluidzufuhr (verbunden mit einer stromab gelegenen Stelle) vor, wobei zwischen der Fluidentnahmevorrichtung und der Fluidzufuhrvorrichtung im Bereich der betreffenden Schaufelreihe keine Verbindung besteht.

Bei dieser Lösung ist zwar die Entnahme von Fluid (in Kombination mit den anderen genannten Ausprägungen), nicht aber die Nutzung der periodisch wiederkehrenden Druckspitzen am Laufpfad einer Schaufelreihe und eine darauf abgestimmte Wahl der Positionierung bestimmter Versorgungsöffnungen vorgesehen.

Die EP 0 754 864 A1 sieht eine Mehrzahl von Nuten oder Kanälen vor, die in Umfangsrichtung oder auch in axialer Richtung verlaufen können, wobei Öffnungen zum Hauptströmungspfad allein innerhalb des Bereichs zwischen der Vorder- und der Hinterkante der Rotorspitze liegen und Hilfsmittel zur Zufuhr von Fluid in besagten Nuten oder Kanäle vorgesehen sind.

Bei dieser Lösung wird lediglich Fluid im Bereich der Rotorspitze zugeführt, nicht aber unter Nutzung der periodisch wiederkehrenden Druckspitzen am Rotorlaufpfad und einer darauf abgestimmten Wahl der Positionierung bestimmter Versorgungsöffnungen vom Rotor durch eine Leitung oder Kammer weggeführt.

Der vorliegenden Erfindung liegt die Aufgabe zugrunde, eine Strömungsarbeitsmaschine der eingangs genannten Art zu schaffen, welche unter Vermeidung des Standes der Technik eine sehr wirkungsvolle Grenzschichtbeeinflussung durch eine dynamische Sekundärfluidführung, d.h. eine pulsierende Fluidentnahme oder Fluidzufuhr bzw. eine zeitlich wechselnd auftretende Fluidentnahme und -zufuhr, aufweist.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß besteht der Rotor aus einer Anzahl von Schaufeln, die mit der rotierenden Welle der Strömungsarbeitsmaschine verbunden sind und Energie an das Arbeitsmedium abgeben. Ein Stator besteht aus einer Anzahl feststehender Schaufeln, die nabenseitig wie gehäuseseitig mit festem oder freiem Schaufelende ausgeführt sein können. Mindestens ein Rotor oder Stator der Strömungsarbeitsmaschine besitzt ein freies Schaufelende mit angrenzendem Laufspalt.

Die Strömungsarbeitsmaschine kann einen Stator vor dem ersten Rotor aufweisen, ein sogenanntes Vorleitrad. Auch kann mindestens ein Stator oder Vorleitrad abweichend von der unbeweglichen Fixierung drehbar gelagert sein, um den Anströmwinkel zu verändern. Eine Verstellung erfolgt beispielsweise durch eine von außerhalb des Ringkanals zugängliche Spindel.

In besonderer Ausgestaltung kann die Strömungsarbeitsmaschine mindestens eine Reihe verstellbarer Rotoren aufweisen.

In einer alternativen Ausgestaltung der Strömungsarbeitsmaschine kann auch vorgesehen sein, dass diese bei Mehrstufigkeit zwei gegenläufige Wellen besitzt, so dass die Rotorschaufelreihen von Stufe zu Stufe die Drehrichtung wechseln. Hierbei existieren keine Statoren zwischen aufeinander folgenden Rotoren. Die Strömungsarbeitsmaschine kann auch eine Nebenstromkonfiguration derart aufweisen, dass sich der einstromige Ringkanal hinter einer bestimmten Schaufelreihe in zwei konzentrische Ringkanäle aufteilt, die ihrerseits mindestens jeweils eine weitere Schaufelreihe umfassen.

Erfindungsgemäß ist im Einzelnen eine Strömungsarbeitsmaschine geschaffen worden, die Mittel zur zeitlich schwankenden und gegebenenfalls richtungsalternierenden Fluidbewegung zwischen laufspaltangrenzenden Naben- und Gehäuseoberflächen (LNGO) und schaufelkanalbegrenzenden Oberflächen (SKO) aufweist, wobei an LNGO mindestens einer Schaufelreihe Öffnungen oder Öffnungsgruppen entlang des Umfangs verteilt angeordnet sind, deren Flächenschwerpunkte um das Ein- oder Vielfache der Schaufelteilung am freien Ende der betreffenden Schaufelreihe von einander entfernt liegen und auf diese Weise eine dynamisch arbeitende Versorgungsstelle (DAV) bilden. Weiterhin ist vorgesehen, dass die Öffnungen an LNGO über mindestens eine außerhalb des Hauptströmungspfades angeordnete Kammer und/oder Leitung mit weiteren Öffnungen an SKO derselben Schaufelreihe und/oder Öffnungen an SKO mindestens einer Schaufel mindestens einer anderen benachbarten Schaufelreihe in Verbindung stehen.

Zusammenfassend ist somit festzustellen, dass Fluid aus dem Strömungsweg im Bereich der laufspaltangrenzenden Naben- und Gehäuseoberfläche (LNGO) entnommen wird. Die Entnahme erfolgt an einer dynamisch arbeitenden Versorgungsstelle (DAV). Das Fluid wird über eine Leitung und gegebenenfalls über eine Kammer, die in der Leitung zwischengeschaltet ist, weitergeleitet, wobei die Weiterleitung entweder gegen die Hauptströmungsrichtung oder in Hauptströmungsrichtung erfolgen kann. Die Ausleitung des Fluids erfolgt an schaufelkanalbegrenzenden Oberflächen (SKO), wobei das Fluid entweder durch die Gehäusewand oder über eine Fläche eines Rotors bzw. Stators ausgeleitet wird. Erfindungsgemäß ist durch die oszillierende Bewegung des Fluids in der Leitung zugleich die Möglichkeit geschaffen, das Fluid in der Leitung in der entgegengesetzten Richtung alternierend zu bewegen, sodass beide der oben beschriebenen Öffnungen SKO und DAV sowohl zur Einleitung als auch zur Abfuhr von Fluid dienen.

Im Folgenden wird die Erfindung anhand von Ausführungsbeispielen in Verbindung mit den Figuren beschrieben. Dabei zeigt:
- Fig.1:: eine schematische Darstellung des Standes der Technik,
- Fig.2:: eine schematische Darstellung von Varianten des erfindungsgemäßen Grundkonzeptes,
- Fig.3:: verschiedene Varianten und Konfigurationen der erfindungsgemäßen Strömungsarbeitsmaschine,
- Fig.4:: eine Darstellung zur erfindungsgemäßen Definition des Begriffs SKO,
- Fig.5:: eine Darstellung zur erfindungsgemäßen Definition des Begriffs LNGO,
- Fig.6a:: eine Darstellung zur Defintion der dynamisch arbeitenden Versorgungsstelle (DAV),
- Fig.6b:: Darstellung zu Varianten der dynamisch arbeitenden Versorgungsstelle (DAV),
- Fig 7a:: Erfindungsgemäße Lösung mit Verbindung zwischen DAV und einem Ort des Hauptströmungspfades vor derselben Schaufelreihe (Grundkonzept A),
- Fig 7b:: Erfindungsgemäße Lösung mit Verbindung zwischen DAV und einem Ort des Hauptströmungspfades vor derselben Schaufelreihe (Grundkonzept A), Ausführung mit gekrümmten Düsen,
- Fig 7c:: Erfindungsgemäße Lösung mit Verbindung zwischen DAV und einem Ort des Hauptströmungspfades vor derselben Schaufelreihe (Grundkonzept A), Ausführung mit gekrümmten Düsen und Trennkörpern,
- Fig 7d:: Erfindungsgemäße Lösung mit Verbindung zwischen DAV und einem Ort des Hauptströmungspfades vor derselben Schaufelreihe (Grundkonzept A), Ausführung mit unterbrochenem bzw. ohne Anstreifbelag,
- Fig.7e:: Erfindungsgemäße Lösung mit Verbindung zwischen DAV und einem Ort des Hauptströmungspfades vor derselben Schaufelreihe (Grundkonzept A), Ausführung mit Bauteiltrennung im Bereich der gekrümmten Düsen,
- Fig.7f:: Erfindungsgemäße Lösung mit Verbindung zwischen DAV und einem Ort des Hauptströmungspfades vor derselben Schaufelreihe (Grundkonzept A), Ausführung mit Bauteiltrennung im Bereich der gekrümmten Düsen und Trennkörpereinsatz,
- Fig.7g:: Erfindungsgemäße Lösung mit Verbindung zwischen DAV und einem Ort des Hauptströmungspfades vor derselben Schaufelreihe (Grundkonzept A), Ausführung mit gekrümmten Düsen in der stromauf liegenden Schaufelreihe,
- Fig.8:: Erfindungsgemäße Lösung für die Einbettung einer gekrümmten Düse in einem Schaufelbauteil mit Umfangsfüssen,
- Fig.9:: Erfindungsgemäße Lösung mit Verbindung zwischen DAV und SKO einer stromauf gelegenen Statorschaufelreihe (Grundkonzept B), und
- Fig.10:: Erfindungsgemäße Lösung mit Verbindung zwischen DAV und SKO einer im benachbarten Hauptströmungspfad gelegenen Schaufelreihe (Grundkonzept C).

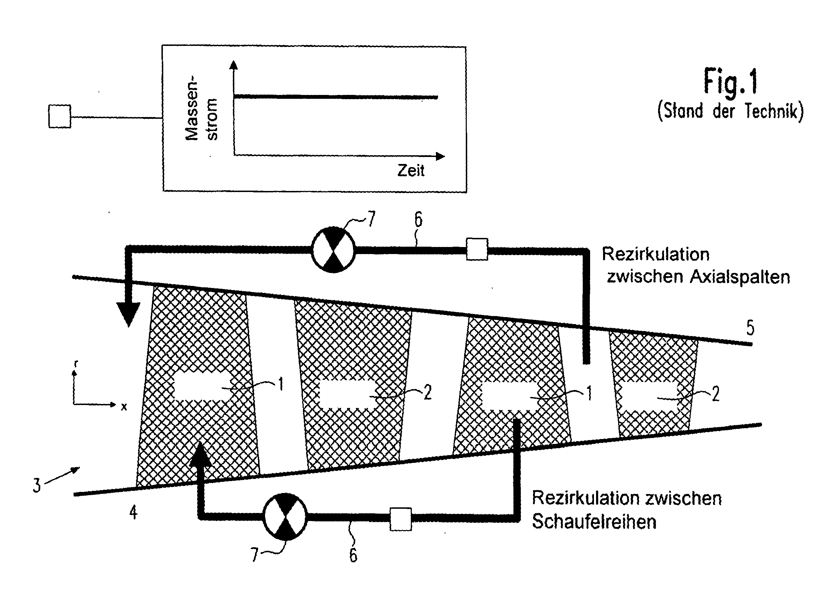

Die Fig. 1 zeigt in stark vereinfachter Darstellung Lösungen nach dem Stand der Technik. Gezeigt ist eine Strömungsarbeitsmaschine mit einer Anzahl von Schaufelreihen, Rotoren 1 wie Statoren 2, innerhalb des Hauptströmungspfades, der durch den Ringkanal 3, üblicherweise eine Nabe 4 (Rotortrommel) und ein Gehäuse 5, begrenzt wird. Existierende Fluidzirkulationssysteme 6 (eventuell mit Drosselorgan 7) erreichen eine Beeinflussung der Strömung mit Sekundärfluidströmen, die an einem festen Betriebspunkt der Strömungsarbeitsmaschine zeitlich unverändert bleiben. Dies ist durch ein kleines Rechtecksymbol in den Sekundärströmungswegen kenntlich gemacht und im oberen Bildteil graphisch dargestellt. Die Öffnungen zum Austausch des Sekundärfluids sind bei bekannten Lösungen entweder an Stellen angeordnet, die bei gegebenem Betriebspunkt einem gleichbleibenden Druck ausgesetzt sind, oder aber sind so beschaffen, dass Druckschwankungen, wie sie zum Beispiel am radialen Laufspalt eines Rotors ohne Deckband an einem bestimmten nicht rotierenden Ort des Gehäuses 5 oder am radialen Laufspalt eines Stators ohne Deckband an einem bestimmten rotierenden Ort der Nabe 4 auftreten, nicht für eine zeitlich veränderliche Sekundärfluidübertragung genutzt werden. Folglich sind die aufgewendeten Sekundärfluidmassenströme ungünstig groß, zeitlich gleichbleibend und richtungsfest.

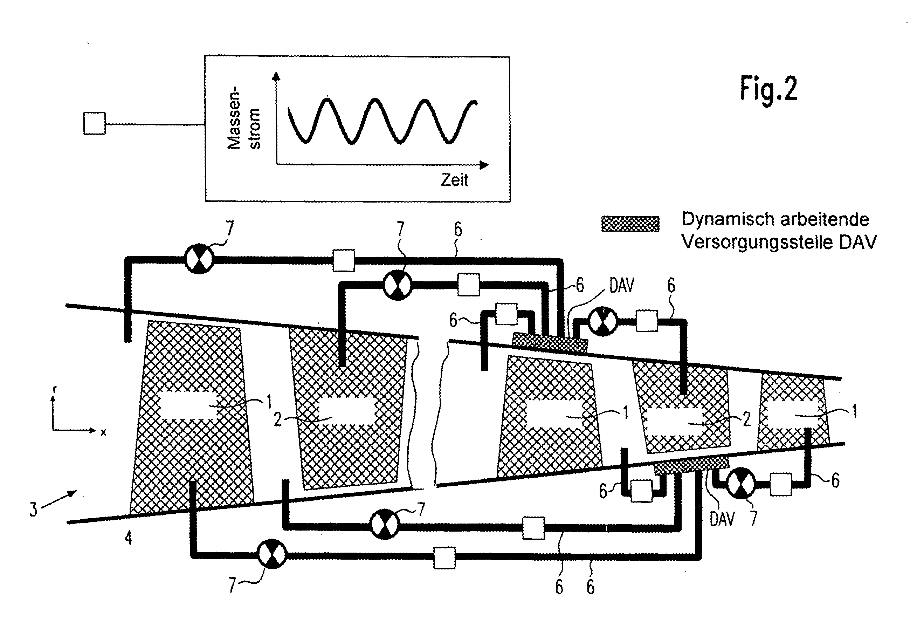

Die Fig. 2 zeigt in stark vereinfachter Darstellung die erfindungsgemäße Strömungsarbeitsmaschine, mit einer Anzahl von Schaufelreihen (Rotoren 1 wie Statoren 2), innerhalb des Hauptströmungspfades 3 (Ringkanal), der durch den Ringkanal 3, üblicherweise eine Nabe (Rotortrommel) und ein Gehäuse 5, begrenzt wird. Erfindungsgemäß wird durch speziell angeordneter Öffnungen an laufspaltangrenzenden Naben- und Gehäuseoberflächen (LNGO) eine Versorgungsstelle für einen sich mit der Schaufelfolgefrequenz der betreffenden Schaufelreihe zeitlich stark ändernden Druck geschaffen. Diese stets am Radialspalt freier Schaufelenden vorgesehene, dynamisch arbeitende Versorgungsstelle (DAV) steht, gegebenenfalls über ein fest oder geregelt arbeitendes Drosselorgan, über ein Leitungssystem mit Öffnungen an schaufelkanalbegrenzenden Oberflächen (SKO) einer oder mehrerer Schaufelreihen der Strömungsarbeitsmaschine in Verbindung.

Folglich sind die sich ergebenden Sekundärfluidmassenströme klein, zeitlich schwankend und gegebenenfalls richtungsalternierend. Dies ist durch ein kleines Rechtecksymbol in den Sekundärströmungswegen kenntlich gemacht und im oberen Bildteil graphisch dargestellt.

In der oberen Bildhälfte sind beispielhaft mehrere an der Peripherie des Gehäuses ausgeführte erfindungsgemäße Lösungen aufgezeigt. Die über dem außenliegenden Radiallaufspalt einer Rotorschaufelreihe der Strömungsarbeitsmaschine angeordnete DAV kann mit mindestens einem der folgenden Orte des Hauptströmungspfades der Strömungsarbeitmaschine verbunden sein:
1.) Öffnungen an (definitionsgemäß zu den SKO gehörenden) Gehäuseoberflächen vor derselben Rotorschaufelreihe;
2.) Öffnungen an SKO einer anderen, stromauf befindlichen Rotor- oder Statorschaufelreihe;
3.) Öffnungen an SKO einer anderen, stromab befindlichen Rotor- oder Statorschaufelreihe.
   Nicht graphisch dargestellt, aber dennoch erfindungsgemäß ist eine Verbindung der Rotor-DAV mit:
4.) Öffnungen an SKO einer Rotor- oder Statorschaufelreihe, die sich in einem benachbarten Hauptströmungspfad befindet (Nebenstromkonfiguration). In der unteren Bildhälfte sind beispielhaft mehrere im Bereich der Nabe ausgeführte erfindungsgemäße Lösungen aufgezeigt. Die unterhalb des innenliegenden Radiallaufspalt es einer Statorschaufelreihe der Strömungsarbeitsmaschine angeordnete DAV kann mit mindestens einem der folgenden Orte des Hauptströmungspfades der Strömungsarbeitmaschine verbunden sein:
   1.) Öffnungen an (definitionsgemäß zu den SKO gehörenden) Nabenoberflächen vor derselben Statorschaufelreihe;
   2.) Öffnungen an SKO einer anderen, stromauf befindlichen Rotor- oder Statorschaufelreihe;
   3.) Öffnungen an SKO einer anderen, stromab befindlichen Rotor- oder Statorschaufelreihe.

   Nicht graphisch dargestellt, aber dennoch erfindungsgemäß ist eine Verbindung der Stator-DAV mit:
4.) Öffnungen an SKO einer Rotor- oder Statorschaufelreihe, die sich in einem benachbarten Hauptströmungspfad befindet (Nebenstromkonfiguration).

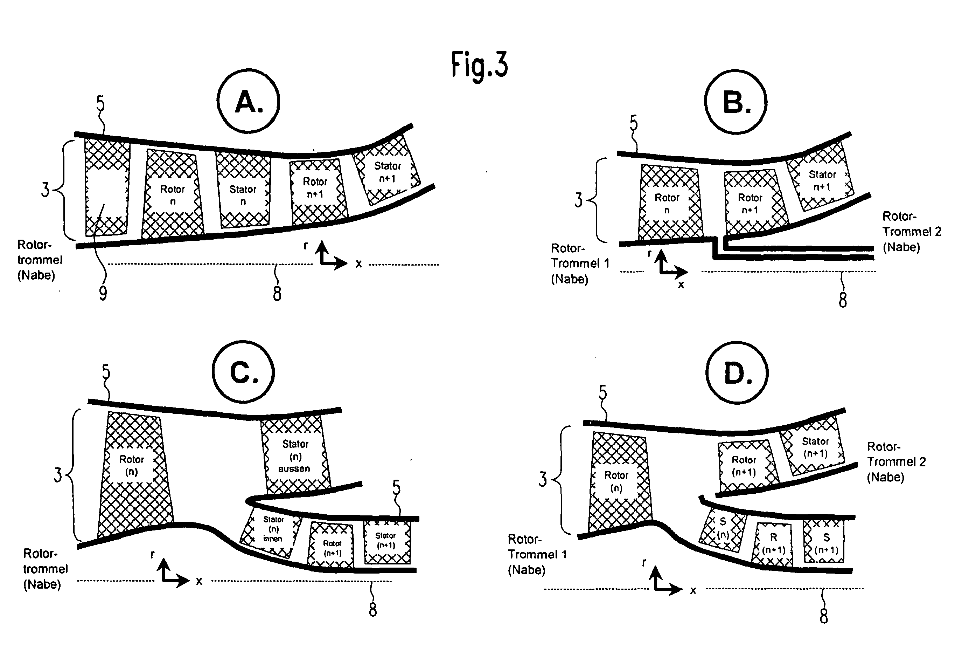

Die Fig. 3 zeigt, um die Anwendungsbreite der vorliegenden Erfindung zu verdeutlichen, vier mögliche Konfigurationen des Hauptströmungspfades der erfindungsgemäßen Strömungsarbeitsmaschine mit dynamischer Selbstbeeinflussung. Gezeigt ist jeweils ein von links nach rechts durchströmter Ringkanal. Um die gekennzeichnete Maschinenachse dreht sich eine Rotortrommel. Bei den in Fig. 3B und 3D gezeigten Ausführungsbeispielen ist eine weitere Rotortrommel (Nabe) vorgesehen. Die Rotoren 1, Statoren 2 sowie das Vorleitrad 9 sind jeweils beschriftet, es ist jeweils in schematischer Weise eine Schaufel dargestellt.

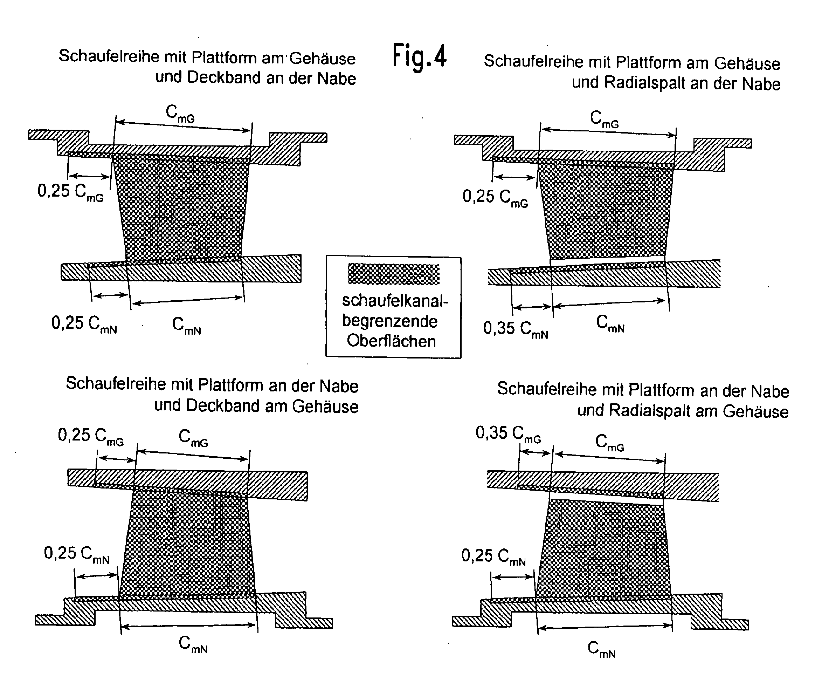

Die Fig. 4 zeigt die Definitionen des erfindungsgemäß verwendeten Begriffs der schaufelkanalbegrenzende Oberflächen SKO. Dabei ist, wie sich aus der Beschriftung der Fig. 4 ergibt, eine unterschiedliche Anordnung und Dimensionierung der einzelnen Bereiche vorgesehen. Es ist wiederum vereinfacht eine Schaufelreihe gezeigt, die innerhalb des Hauptströmungspfades (Ringkanals 3) zwischen einem Gehäuse 5 und einer Nabe 4 (Rotortrommel) angeordnet ist. Schaufelkanalbegrenzende Oberflächen im Sinne der vorliegenden Erfindung sind, wie in Fig. 4 dargestellt, alle Oberflächen einer Schaufel selbst (Saugseite, Druckseite, Vorderkante und Hinterkante), Oberflächen an Nabe 4 und Gehäuse 5 der Strömungsarbeitsmaschine mit einer Lage zwischen der Vorder- und Hinterkante der betrachteten Schaufelreihe, Oberflachen an Nabe oder Gehäuse mit fester Verbindung zur Schaufel (Schaufelplattformen, Deckbänder, Blisk- oder Bling-Konfigurationen) zwischen einem Ort 25% der örtlichen meridionalen Schaufelsehnenlänge (CmG bzw. CmN) vor der Vorderkante gelegen und der Vorderkante selbst, Oberflächen an Nabe oder Gehäuse ohne feste Verbindung zur Schaufel (freie Rotor- oder Statorenden) zwischen einem Ort 35% der örtlichen meridionalen Schaufelsehnenlänge (CmG bzw. CmN) vor der Vorderkante gelegen und der Vorderkante selbst.

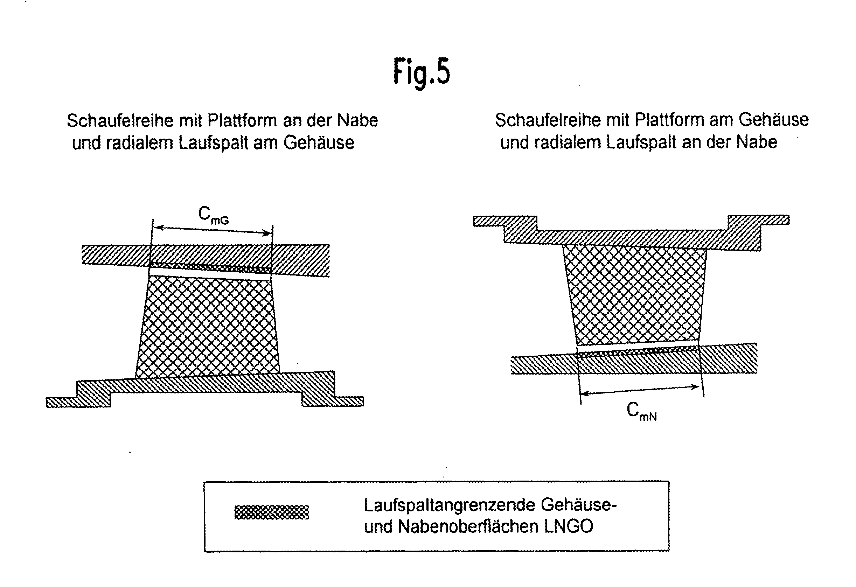

Die Fig. 5 zeigt die Definitionen des erfindungsgemäß verwendeten Begriffs der Laufspaltangrenzenden Naben- und Gehäuseoberflächen LNGO. Es ist wiederum vereinfacht eine Schaufelreihe gezeigt, die innerhalb des Hauptströmungspfades (Ringkanals) zwischen einem Gehäuse 5 und einer Nabe 4 (Rotortrommel) angeordnet ist. Laufspaltangrenzende Naben- und Gehäuseoberflächen im Sinne der vorliegenden Erfindung sind, wie in Fig. 5 dargestellt, alle Oberflächen der inneren und äußeren Begrenzung des Hauptströmungspfades (Ringkanals) der Strömungsarbeitsmaschine, die im Bereich der zwischen Vorder- und Hinterkantenposition zur Verfügung stehenden, meridionalen Schaufelsehnenlänge (CmG bzw. CmN) an den Radialspalt einer Rotor- bzw. Statorreihe angrenzen, und die dadurch gekennzeichnet sind, dass zwischen ihnen und den Schaufeln der betreffenden Schaufelreihe eine Relativbewegung vorliegt.

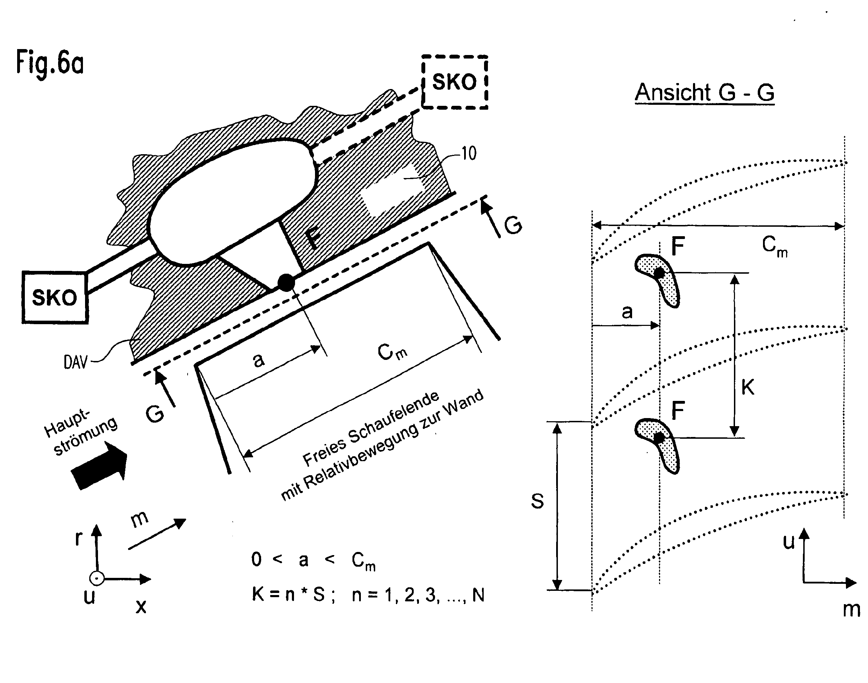

Die Fig. 6a zeigt die dynamisch arbeitende Versorgungsstelle DAV, die die Grundlage aller erfindungsgemäßen Lösungen darstellt. Definitionsgemäß ist sie an laufspaltangrenzenden Oberflächen der Nabe 4 oder des Gehäuses 5 ausgebildet. Im linken Bildteil ist eine entsprechende Konfiguration in der durch Radialrichtung r und Axialrichtung x gegebenen Ebene dargestellt. Der Laufspalt ist zwischen den Schaufelspitzen der betreffenden Schaufelreihe und der betreffenden Wandung ausgebildet. Zwischen Schaufelspitzen und Wand liegt eine Relativbewegung vor. In dem Bereich zwischen Vorder- und Hinterkante der Schaufelreihe ist in der laufspaltangrenzenden Wand des Hauptströmungspfades eine in Umfangsrichtung der Maschine verteilte Anordnung von Öffnungen oder Öffnungsgruppen gegeben, deren Positionen durch ihre jeweiligen Flächenschwerpunkte F definiert sind. In der Meridianrichtung m besitzen die Flächenschwerpunkte der einzelnen Öffnungen bzw. der einzelnen Öffnungsgruppen einen Abstand a von der Vorderkante, der zwischen 0% und 100% der meridionalen Blattspitzensehnenlänge Cm betragen kann (0 < a < Cm). Für erfindungsgemäß besonders günstige Anordnungen gilt 0,05*Cm < a < 0,40*Cm. Die Öffnungen bzw. Öffnungsgruppen stellen die Verbindung zu einer vom Hauptströmungspfad getrennten Anordnung von Strömungskanälen her, die sich über Teile oder die Gesamtheit des Umfangs erstrecken und eine Verbindung zu SKO stromauf oder stromab gelegener Schaufelreihen herstellt. In der rechten Bildhälfte ist die Ansicht G-G, eine Umfangsabwicklung der erfindungsgemäßen Anordnung einzelner Öffnungen gezeigt. Besonders günstig ist eine Anordnung der Öffnungsflächenschwerpunkte F mit gleichem Abstand a von der Vorderkantenflucht sowie mit Abständen K der einzelnen Flächenschwerpunkte von exakt einer Schaufelteilung S oder einem ganzzahligen Vielfachen von S (K = n*S; n=1,2,3, ..., N). N ist die Schaufelanzahl. Somit beträgt der erfindungsgemäß kleinst mögliche Abstand K eine Schaufelteilung S (N Öffnungen bzw. Öffnungsgruppen). Der erfindungsgemäß größt mögliche Abstand beträgt eine gesamte, sich aus der Schaufelanzahl N und der Schaufelteilung S ergebende Umfangslänge (1 Öffnung bzw. Öffnungsgruppe). Wenn erforderlich, können innerhalb einer gegebenen DAV-Anordnung a und K in den Grenzen von +/-0,25Cm variieren, ohne dass die grundsätzliche Funktionalität der DAV verloren geht.

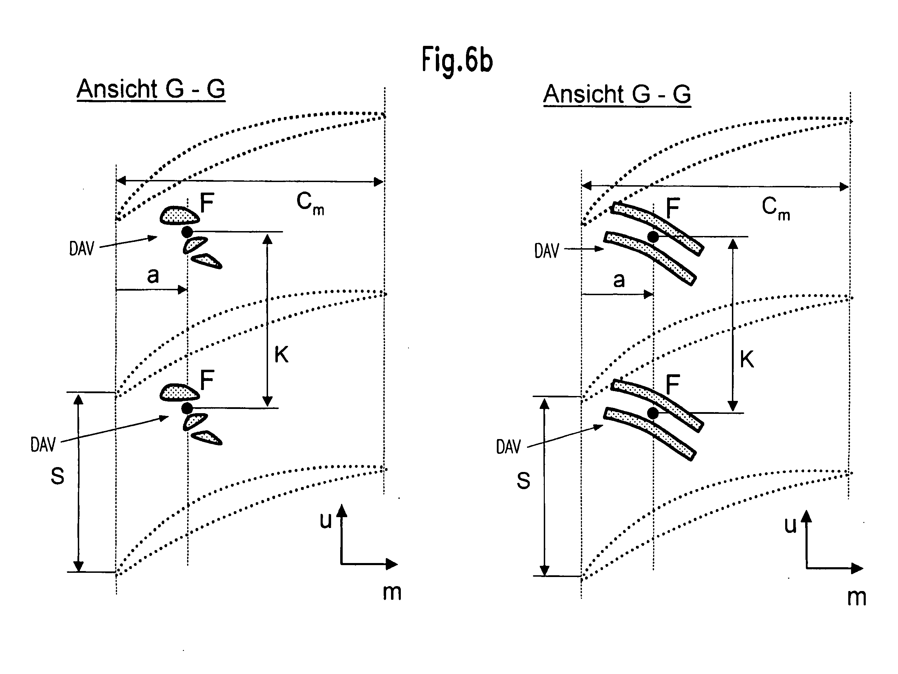

Die Fig.6b zeigt alternative erfindungsgemäße Anordnungen, bei denen an die Stelle einer Einzelöffnung eine Öffnungsgruppe tritt, dadurch gekennzeichnet, dass jede Gruppe als solche aufgrund der Größe der Zwischenabstände eindeutig identifizierbar ist, einen gruppenbezogenen Flächenschwerpunkt F aufweist und sich innerhalb einer Schaufelpassage ohne Überdeckung mit Saug- oder Druckseite zweier nebeneinanderliegender Schaufeln positionieren lässt. Die Form der zur Gruppe gehörenden Öffnungen ist dabei von untergeordneter Bedeutung und daher frei wählbar. Erfindungsgemäß möglich sind speziell geformte Löcher oder Schlitze.

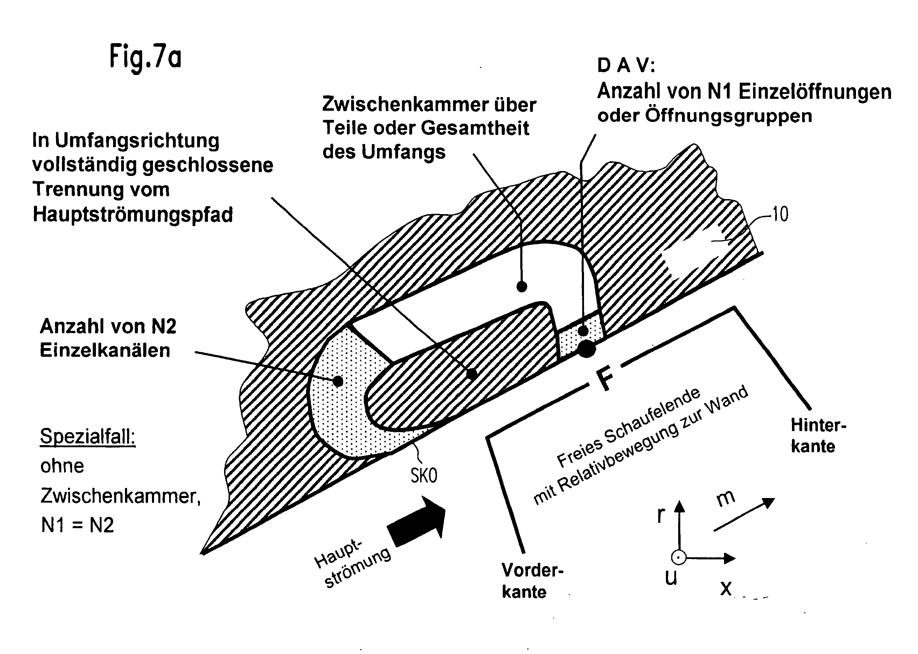

Die Fig.7a zeigt eine erfindungsgemäße Lösung mit Verbindung zwischen DAV und einem Ort des Hauptströmungspfades vor derselben Schaufelreihe (Grundkonzept A). Hier stellt eine Anzahl von N1 Öffnungen bzw. Öffnungsgruppen eine Verbindung zu einer außerhalb des Hauptströmungspfads gelegenen Zwischenkammer her, die sich über die Gesamtheit oder Teile des Umfangs erstrecken kann. Eine Anzahl von N2 Kanälen (N2<=N1) stellt die Verbindung zwischen der Zwischenkammer und einem Wandbereich am Hauptströmungspfad vor der Schaufelreihe her. In Meridianrichtung betrachtet liegt zwischen dem Ort dieser weiteren Öffnungen und der Lage der DAV erfindungsgemäß stets ein in Umfangsrichtung vollständig geschlossener Wandbereich. Erfindungsgemäß kann es bei kleiner Anzahl N1 vorteilhaft sein, die Konfiguration ohne Zwischenkammer auszuführen; dann ist N1=N2.

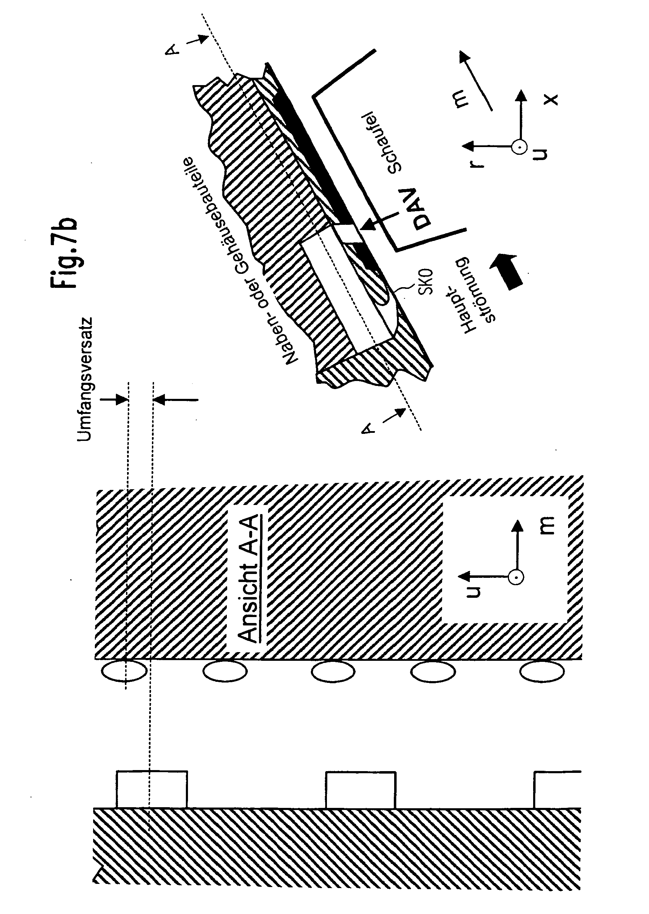

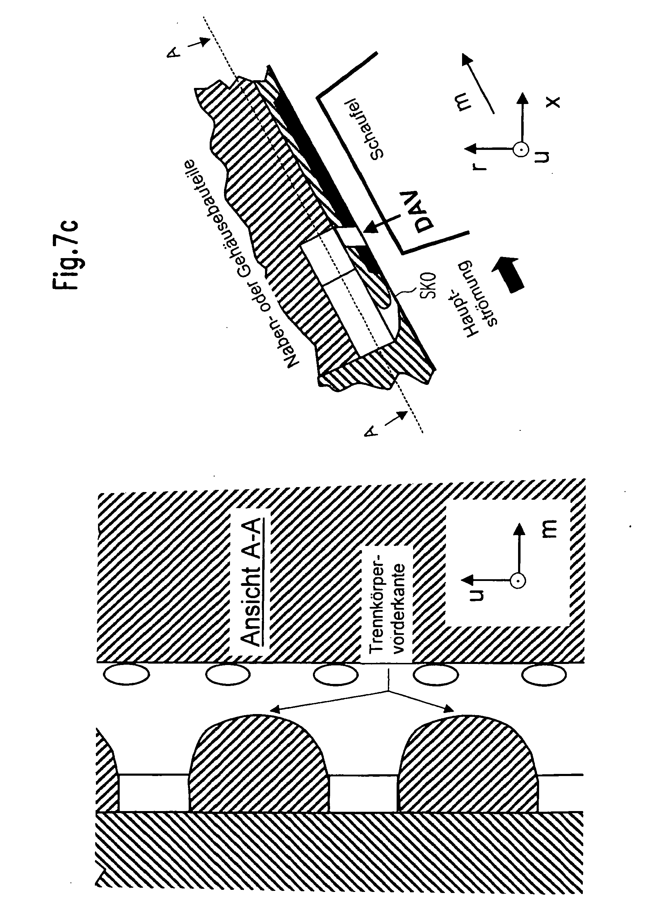

Die Fig.7b zeigt eine besonders einfache konstruktive Ausführung des Grundkonzeptes A. Die Öffnungen der DAV sind hier als einzelne Lochbohrungen ausgeführt, deren Achse sowohl in Meridian- als auch in Umfangsrichtung geneigt sein kann. In diesem Ausführungsbeispiel ist eine Zwischenkammer vorgesehen, die sich entlang des gesamten Umfangs erstreckt. Stromauf der DAV grenzt die Zwischenkammer an Öffnungen, die ebenfalls am Hauptströmungspfad angeordnet sind und in erfindungsgemäßer, besonders vorteilhafter Ausführung die Form einer stromabwärts gekrümmten Düse aufweisen. Die gekrümmte Düse ist dadurch gekennzeichnet, dass die Senkrechte ihrer Engquerschnittsfläche mit der Meridianrichtung einen spitzen Winkel einschließt. Die Fig.7c zeigt die gleiche Konfiguration, aber mit zusätzlichen Trennkörpern zur Formung von Einzelkanälen, die jeweils zu einer Düse führen. Die Kontur der Verbindungskanäle (bzw. die Kontur der Trennkörper) ist hier rund dargestellt, doch ist erfindungsgemäß auch ein einfacherer, im Extremfall geradliniger Verlauf mit spitzer Trennkörpervorderkante möglich. Ebenfalls besonders vorteilhaft ist es, ein ganzzahliges Verhältnis von N1/N2 vorzusehen (N1/N2 = 2, 3, 4, ...). Ebenfalls besonders vorteilhaft ist es, die DAV-Öffnungen und die Düsenöffnungen in Umfangsrichtung um einen bestimmten Betrag gegeneinander versetzt anzuordnen.

Erfindungsgemäß kann der Querschnitt der Zwischenkammer und der Verbindungskanäle in der Meridianebene abweichend von der hier gewählten einfachen Rechteckform zusätzliche Rundungen aufweisen und die begrenzenden Wände müssen nicht parallel oder senkrecht zum Hauptströmungspfad angeordnet sein.

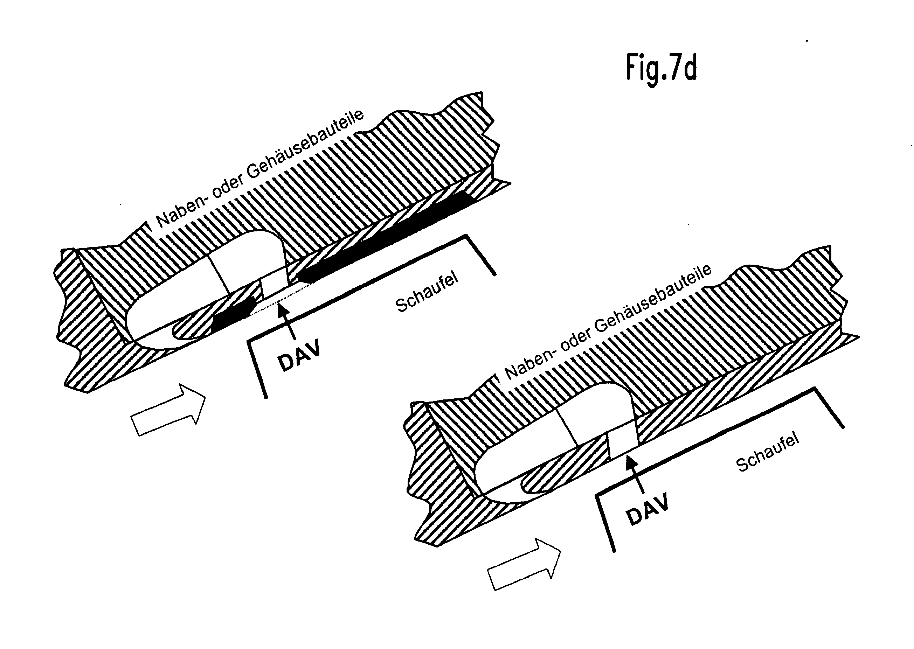

Erfindungsgemäß können die Öffnungen der DAV entweder, wie in Fig.7b,c gezeigt, durch den auf das Wandbauteil an der Nabe oder am Gehäuses aufgebrachten Anstreifbelag führen, oder wie in Fig.7d dargestellt, in einem im Anstreifbelag eingebetteten Vorsprung des Wandbauteils ausgebildet sein, der mit der Oberfläche des Ansteifbelages bündig abschließt oder relativ zum Anstreifbelags radial zurückgezogen ist. Der Wandmaterialvorsprung ist an diskreten Stellen oder am gesamten Umfang vorgesehen. Schließlich können die Öffnungen der DAV aber auch in einer ganz ohne Anstreifbelag versehenen Wandung ausgebildet sein.

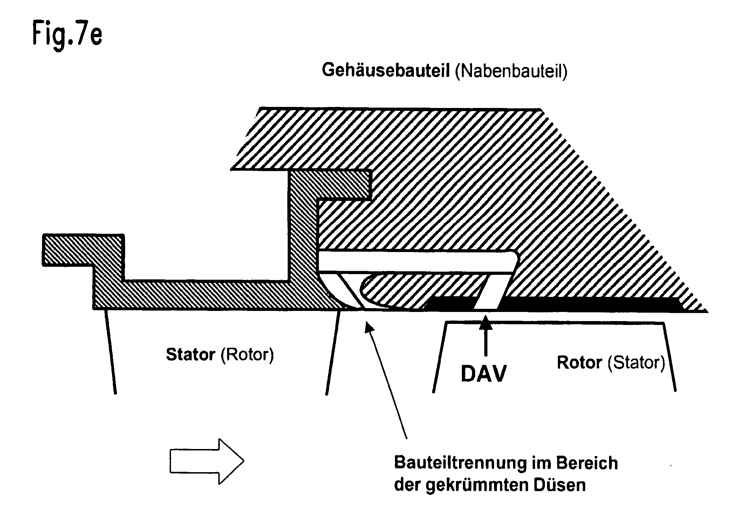

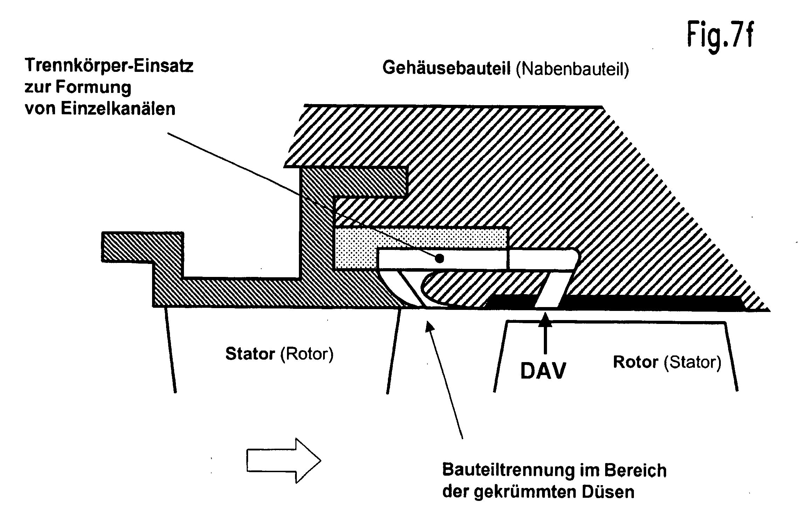

Die Fig. 7e zeigt weiterhin eine erfindungsgemäße konstruktive Lösung für das Grundkonzept A, bei der Bauteile der stromauf liegenden Schaufelreihe mit einbezogen sind. Es kann sich hierbei um eine Baugruppe aus Gehäuse- und Statorteilen (Laufspalt am Rotor) oder alternativ um eine Baugruppe aus Naben- und Rotorteilen (Laufspalt am Stator 2) handeln. Die stromauf der DAV befindlichen Öffnungen, hier wieder als gekrümmte Düsen gezeigt, werden gemeinsam von Gehäuse- und Statorbauteilen (bzw. Naben- und Rotorbauteilen) gebildet. Die Grenze zwischen den betreffenden Bauteilen befindet sich an einer beliebigen Stelle der Düsenkontur. Die Fig.7f zeigt eine verwandte Konfiguration, jedoch mit einem zusätzlichen, idealerweise halbring- oder ringförmigen Einsatz, der mit dem Düsenbereich überlappend angeordnet ist und in dem einzelne, auf die Düsenanzahl und Düsenform abgestimmte Kanäle (Trennkörper) ausgebildet sind.

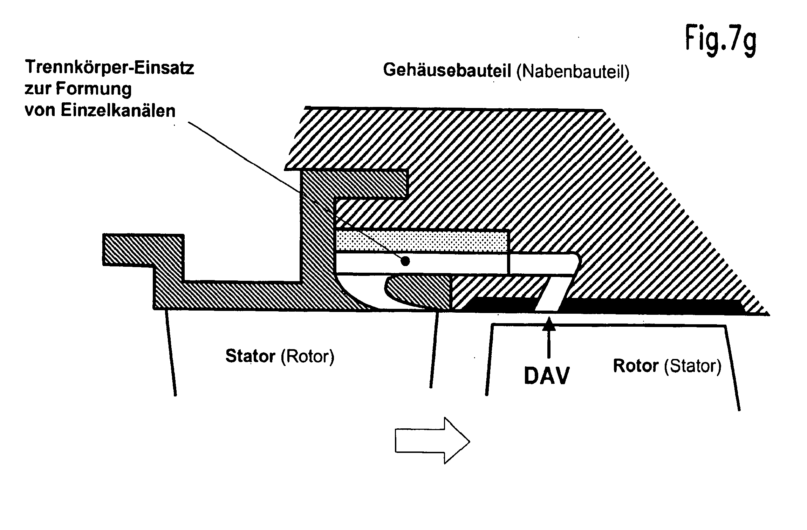

Die Fig.7g zeigt weiterhin eine erfindungsgemäße konstruktive Lösung für das Grundkonzept A, bei der Bauteile der stromauf liegenden Schaufelreihe mit einbezogen sind. Die stromauf der DAV befindlichen Öffnungen werden, hier wieder als gekrümmte Düsen gezeigt, sind in dieser Variante vollständig in Bauteilen der stromauf liegenden Schaufelreihe angeordnet und befinden sich zumindest teilweise innerhalb einer Passage zwischen zwei Schaufeln. Auch diese Anordnung kann erfindungsgemäß mit Trennkörpereinsatz (wie Fig.7g zeigt) oder in einfacherer Weise ohne Trennkörpereinsatz ausgeführt sein.

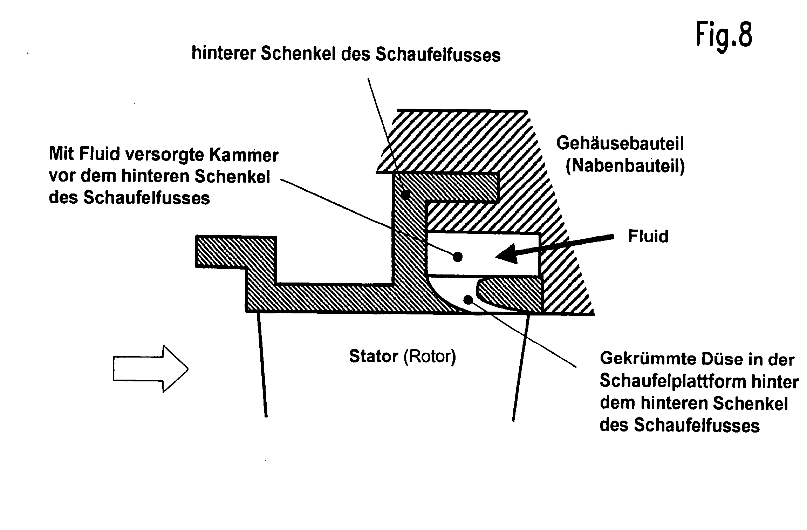

Die Fig. 8 zeigt herausgehoben das Konzept eines Schaufelbauteils mit Umfangsfüßen und mindestens einer, mindestens teilweise innerhalb des beschaufelten Raumes (Schaufelpassage) angeordneten, gekrümmten Düse. Erfindungsgemäß kennzeichnend hierfür ist die Anordnung der Düse stromab des hinteren Schenkels des Schaufelfußes.

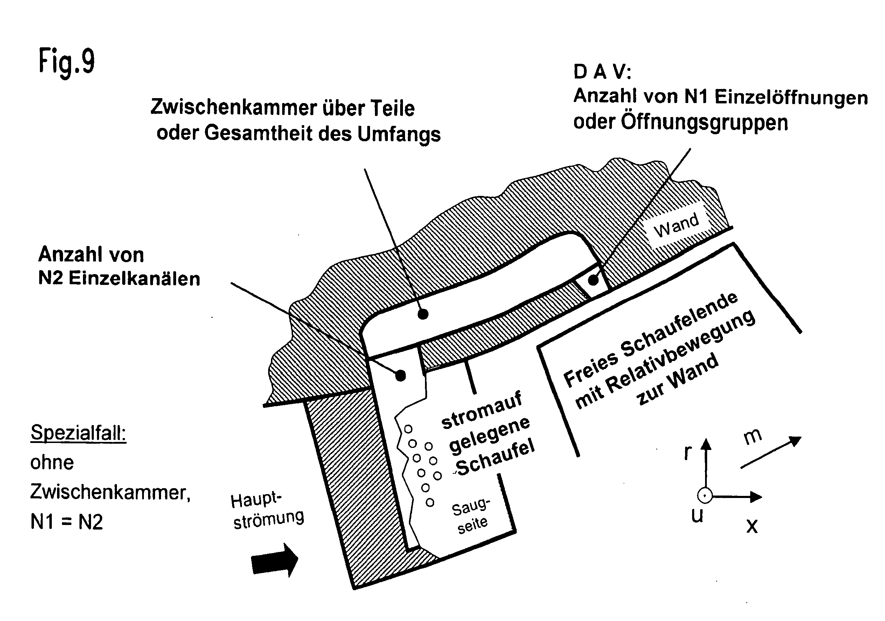

Die Fig. 9 zeigt eine erfindungsgemäße Lösung mit Verbindung zwischen DAV und SKO einer stromauf gelegenen Schaufelreihe (Grundkonzept B). Als SKO ist hier beispielhaft die Schaufelsaugseite gewählt worden. Ebenso beispielhaft ist eine Konfiguration von Löchern als Öffnungen dargestellt. Erfindungsgemäß ist jedoch jede andere Öffnungsposition und -konfiguration an anderen SKO der Schaufel vorsehbar. Erfindungsgemäß stellt eine Anzahl von N1 Öffnungen bzw. Öffnungsgruppen der DAV eine Verbindung zu einer außerhalb des Hauptströmungspfads gelegenen Zwischenkammer her, die sich über die Gesamtheit oder Teile des Umfangs erstrecken kann. Eine Anzahl von N2>=1 Kanälen stellt die Verbindung zwischen der Zwischenkammer und dem Inneren von Schaufel der stromauf gelegenen Schaufelreihe her. Mindestens eine Schaufel der Reihe wird über je einen Kanal zugänglich gemacht. Für den Spezialfall, dass die Anzahlen der Einzelkanäle und der DAV-Öffnungen übereinstimmen (N1=N2), kann die Anordnung erfindungsgemäß ohne Zwischenkammer ausgeführt werden.

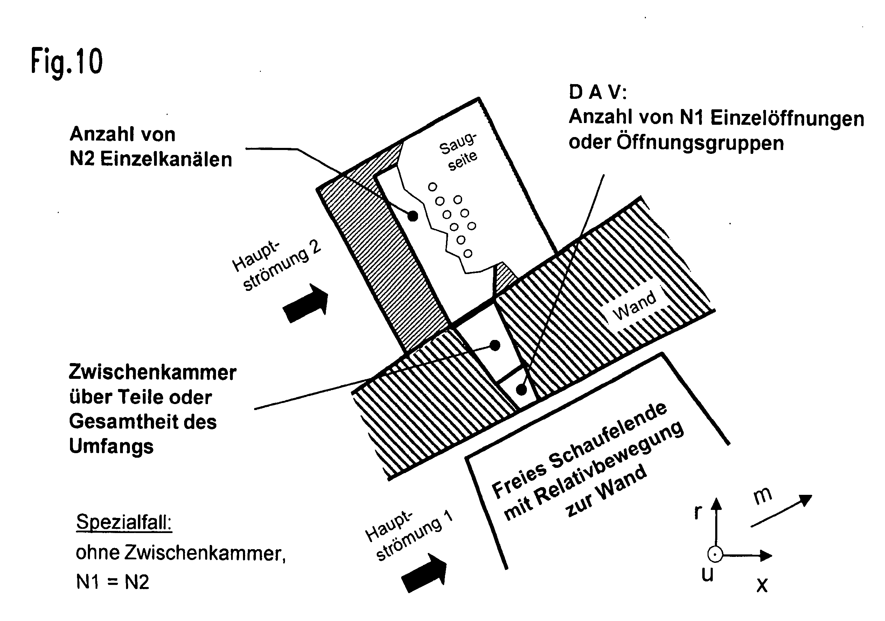

Die Fig.10 zeigt eine erfindungsgemäße Lösung mit Verbindung zwischen DAV und SKO einer im benachbarten Hauptströmungspfad gelegenen Schaufelreihe (Grundkonzept C). Als SKO ist hier beispielhaft die Schaufelsaugseite gewählt worden. Ebenso beispielhaft ist eine Konfiguration von Löchern als Öffnungen dargestellt. Erfindungsgemäß ist jedoch jede andere Öffnungsposition und -konfiguration an anderen SKO der Schaufel vorsehbar. Erfindungsgemäß stellt eine Anzahl von N1 Öffnungen bzw. Öffnungsgruppen der DAV eine Verbindung zu einer außerhalb der Hauptströmungspfade 1 und 2 gelegenen Zwischenkammer her, die sich über die Gesamtheit oder Teile des Umfangs erstrecken kann. Eine Anzahl von N2>=1 Kanälen stellt die Verbindung zwischen der Zwischenkammer und dem Inneren von Schaufel der stromauf gelegenen Schaufelreihe her. Mindestens eine Schaufel der Reihe im Hauptströmungspfad 2 wird über je einen Kanal zugänglich gemacht. Für den Spezialfall, dass die Anzahlen der Einzelkanäle und der DAV-Öffnungen übereinstimmen (N1=N2), kann die Anordnung erfindungsgemäß ohne Zwischenkammer ausgeführt werden.

Bei der erfindungsgemäßen Strömungsarbeitsmaschine wird somit ein bislang unerreichtes Maß an Grenzschichtbeeinflussung erzielt. Dies ist bei unterschiedlichen Arten von Strömungsarbeitsmaschinen wie Bläsern, Verdichtern, Pumpen und Ventilatoren möglich. Je nach Ausführungsvariante sind eine aerodynamische Belastung und eine Strömungsumlenkung möglich, die bis zu 50% über den nach heutigem Stand der Technik erreichten Werten liegen. Für festgeschriebene Leistungswerte einer Strömungsarbeitsmaschine lässt sich unter einer Verbesserung des Wirkungsgrades von bis zu 3% die Anzahl der verbauten Teile um etwa 30% gegenüber einer konventionellen Bauweise senken. Die Kosten sinken um 10% bis 15%. Bei Einsatz des neuen Schaufelkonzeptes im Verdichter eines Flugtriebwerkes mit rund 25000 Pfund Schub ergibt sich eine Reduzierung des spezifischen Kraftstoffverbrauches von bis zu 1% und eine Gewichtsersparnis von rund 15%.

### Bezugszeichenliste

- 1: Rotor
- 2: Stator
- 3: Ringkanal
- 4: Nabe
- 5: Gehäuse
- 6: Leitung (Sekundärfluidstrom)
- 7: Drosselorgan
- 8: Maschinenachse
- 9: Vorleitrad
- 10: Wand

## Patentansprüche

1. Strömungsarbeitsmaschine mit zumindest einem Rotor (1) und einem Stator (2), wobei eine Nabe (4) und ein Gehäuse (5) die Durchströmung des Rotors (1) und des Stators (2) nach innen und außen begrenzen und laufspaltangrenzende Naben- und Gehäuseoberflächen (LNGO) aufweisen, wobei an zumindest einer laufspaltangrenzenden Naben- und Gehäuseoberfläche (LNGO) Öffnungen entlang des Umfangs ausgebildet sind, welche zumindest eine Versorgungsstelle (DAV) bilden, welche über zumindest eine Leitung (6) mit zumindest einer Öffnung an einer schaufelkanalbegrenzenden Oberfläche (SKO) verbunden ist,
**dadurch gekennzeichnet,**
**dass** die Versorgungsstelle (DAV) dynamisch arbeitend ausgebildet ist,
**dass** mehrere Öffnungen an der schaufelkanalbegrenzenden Oberfläche (SKO) vorgesehen sind, und
**dass** die Flächenschwerpunkte der Öffnungen an den laufspaltangrenzenden Naben- und Gehäuseoberflächen (LNGO) um das ein- oder vielfache der Schaufelteilung am freien Ende der betreffenden Schaufelreihe voneinander entfernt liegen.

2. Strömungsarbeitsmaschine nach Anspruch 1, **dadurch gekennzeichnet, dass** die Öffnungen der dynamisch arbeitenden Versorgungsstelle (DAV) in Form von Öffnungsgruppen ausgebildet sind.

3. Strömungsarbeitsmaschine nach einem der Ansprüche 1 oder 2, **dadurch gekennzeichnet, dass** die Öffnungen an laufspaltangrenzenden Naben- und Gehäuseoberflächen (LNGO) über mindestens eine außerhalb des Hauptströmungspfades angeordnete Kammer und/oder Leitung (6) mit weiteren Öffnungen an schaufelkanalbegrenzenden Oberflächen (SKO) derselben Schaufelreihe in Verbindung stehen.

4. Strömungsarbeitsmaschine nach einem der Ansprüche 1 bis 3, **dadurch gekennzeichnet, dass** die Öffnungen an laufspaltangrenzenden Naben- und Gehäuseoberflächen (LNGO) über mindestens eine außerhalb des Hauptströmungspfades angeordnete Kammer und/oder Leitung (6) mit weiteren Öffnungen an schaufelkanalbegrenzenden Oberflächen (SKO) mindestens einer Schaufel mindestens einer anderen benachbarten Schaufelreihe in Verbindung stehen.

5. Strömungsarbeitsmaschine nach einem der Ansprüche 1 bis 4, **dadurch gekennzeichnet, dass** die weiteren Öffnungen an schaufelkanalbegrenzenden Oberflächen (SKO) in einem Schaufelbauteil mit Umfangsfüßen angeordnet sind und durch mindestens eine, mindestens teilweise innerhalb des beschaufelten Raumes platzierte, gekrümmte Düse gegeben sind, wobei die Düse stromab des hinteren Schenkels des Schaufelfußes angeordnet ist.

6. Strömungsarbeitsmaschine nach einem der Ansprüche 1 bis 5, **dadurch gekennzeichnet, dass** in der Leitung (6) ein Drosselorgan (7) angeordnet ist.

7. Strömungsarbeitsmaschine nach Anspruch 6, **dadurch gekennzeichnet, dass** das Drosselorgan (7) fest arbeitet.

8. Strömungsarbeitsmaschine nach Anspruch 6, **dadurch gekennzeichnet, dass** das Drosselorgan (7) geregelt arbeitet.

## Claims

1. Turbomachine with at least one rotor (1) and one stator (2), with a hub (4) and a casing (5) confining the flow through the rotor (1) and the stator (2) to the inside and to the outside and featuring running-gap adjacent hub and casing surfaces (LNGO), with openings being provided along the circumference on at least one running-gap adjacent hub and casing surface (LNGO) which form at least one supply point (DAV) which is connected via at least one line (6) to at least one opening on a blade-passage confining surface (SKO), **characterized in that** the supply point (DAV) is designed as a dynamically operating one, that several openings are provided on the blade-passage confining surface (SKO), and that the centroids of the openings on the running-gap adjacent hub and casing surfaces (LNGO) are spaced by the unity or multiple of the blade pitch at the free end of the respective blade row.

2. Turbomachine in accordance with Claim 1, **characterized in that** the openings of the dynamically operating supply point (DAV) are provided as groups of openings.

3. Turbomachine in accordance with Claim 1 or 2, **characterized in that** the openings on the running-gap adjacent hub and casing surfaces (LNGO) are connected via at least one chamber and/or line (6) situated outside the main flow path to further openings on blade-passage confining surfaces (SKO) of the same blade row.

4. Turbomachine in accordance with one of the Claims 1 to 3, **characterized in that** the openings on the running-gap adjacent hub and casing surfaces (LNGO) are connected via at least one chamber and/or line (6) situated outside the main flow path to further openings on blade-passage confining surfaces (SKO) of at least one blade of at least another adjacent blade row.

5. Turbomachine in accordance with one of the Claims 1 to 4, **characterized in that** the further openings on blade-passage confining surfaces (SKO) are arranged in a blade component with circumferential roots and defined by at least one curved nozzle located at least partly within the bladed space, with the nozzle being arranged downstream of the rear leg of the blade root.

6. Turbomachine in accordance with one of the Claims 1 to 5, **characterized in that** a throttling element (7) is arranged in the line (6).

7. Turbomachine in accordance with Claim 6, **characterized in that** the throttling element (7) is fixed.

8. Turbomachine in accordance with Claim 6, **characterized in that** the throttling element (7) is regulated.

## Revendications

1. Machine à écoulement avec au moins un rotor (1) et un stator (2), sachant que l'écoulement du rotor (1) et du stator (2) vers l'intérieur et vers l'extérieur est limité par un moyeu (4) et un carter (5), qui présentent des surfaces limitrophes de l'interstice de roulement (LNGO), et sachant que sur au moins une surface du moyeu et du carter limitrophe de l'interstice de roulement (LNGO) sont prévus des orifices le long de la circonférence, qui constituent au moins un point d'alimentation (DAV) qui est relié par au moins une conduite (6) à au moins un orifice sur une surface limitant le canal d'aubes (SKO), **caractérisée en ce que** le point d'alimentation (DAV) travaille dynamiquement, que plusieurs orifices sont prévus sur la surface limitant le canal d'aubes (SKO), et que la distance entre les points centroïdes des orifices sur les surfaces du moyeu et du carter limitrophes de l'interstice de roulement (LNGO) est égale au pas d'aube ou à un multiple du pas d'aube à l'extrémité libre de la rangée d'aubes en question.

2. Machine à écoulement selon la revendication n° 1, **caractérisée en ce que** les orifices du point d'alimentation (DAV) travaillant dynamiquement sont conçus en forme de groupes d'orifices.

3. Machine à écoulement selon la revendication n° 1 ou 2, **caractérisée en ce que** les orifices sur des surfaces du moyeu et du carter limitrophes de l'interstice de roulement (LNGO) sont reliés à d'autres orifices sur des surfaces limitant le canal d'aubes (SKO) de la même rangée d'aubes par au moins une chambre et/ou conduite (6) arrangée(s) en dehors de la voie d'écoulement principale.

4. Machine à écoulement selon une des revendications n° 1 à 3, **caractérisée en ce que** les orifices sur des surfaces du moyeu et du carter limitrophes de l'interstice de roulement (LNGO) sont reliés à d'autres orifices sur des surfaces limitant le canal d'aubes (SKO) d'au moins une aube d'au moins une autre rangée d'aubes voisine par au moins une chambre et/ou conduite (6) arrangée(s) en dehors de la voie d'écoulement principale.

5. Machine à écoulement selon une des revendications n° 1 à 4, **caractérisée en ce que** les autres orifices sur des surfaces limitant le canal d'aubes (SKO) sont arrangés dans un composant d'aube avec pieds circonférentiels et sont donnés par au moins une buse incurvée placée au moins en partie à l'intérieur de l'espace aubagé, sachant que la buse est arrangée en aval du côté arrière du pied d'aube.

6. Machine à écoulement selon une des revendications n° 1 à 5, **caractérisée en ce qu'**un organe d'étranglement (7) est arrangé dans la conduite (6).

7. Machine à écoulement selon la revendication n° 6, **caractérisée en ce que** l'organe d'étranglement (7) travaille de manière fixe.

8. Machine à écoulement selon la revendication n° 6, **caractérisée en ce que** l'organe d'étranglement (7) travaille de manière réglée.
